(19) Europäisches Patentamt

European Patent Office

Office européen des brevets

(11) EP 0 728 781 A2

(12) EUROPÄISCHE PATENTANMELDUNG

(43) Veröffentlichungstag:
28.08.1996 Patentblatt 1996/35

(51) Int. Cl.⁶: C08G 12/40

(21) Anmeldenummer: 96102674.7

(22) Anmeldetag: 22.02.1996

(84) Benannte Vertragsstaaten:
AT BE CH DE DK ES FR GB IT LI NL SE

(30) Priorität: 23.02.1995 DE 19506218

(71) Anmelder: SKW Trostberg
Aktiengesellschaft
D-83308 Trostberg (DE)

(72) Erfinder:
• Weichmann, Josef, Dr.
84568 Pleiskirchen (DE)
• Wolfertstetter, Franz
83329 Wonneberg (DE)

• Winkelmann, Herbert
84518 Garching (DE)
• Kern, Alfred, Dr.
84558 Kirchweidach (DE)

(74) Vertreter: Huber, Bernhard, Dipl.-Chem. et al
Patentanwälte
H. Weickmann, Dr. K. Fincke
F.A. Weickmann, B. Huber
Dr. H. Liska, Dr. J. Prechtel, Dr. B. Böhm,
Kopernikusstrasse 9
81679 München (DE)

(54) **Hochviskose Sulfonsäuregruppen enthaltende Kondensationsprodukte auf Basis von Amino-s-triazinen**

(57) Die Erfindung betrifft hochviskose, Sulfonsäuregruppen enthaltende Kondensationsprodukte auf Basis von Amino-s-triazinen mit wenigstens 2 Aminogruppen und Formaldehyd, die als einen Feststoffgehalt von 20 Gew.-% aufweisende wäßrige Lösungen eine Viskosität von 500 bis 100 000 cP bei 20°C und einen pH-Wert von 8,0 bis 13,0 besitzen und durch

a) Kondensation von Amino-s-triazin, Formaldehyd und Sulfit im Molverhältnis 1 : 1,9 bis 2,9 : 0,7 bis 1,3 in wäßriger Lösung bei einem pH-Wert von 9,0 bis 12,0 und einer Temperatur von 50 bis 90°C, bis das Sulfit nicht mehr nachweisbar ist und
b) anschließende Weiterkondensation bei einem pH-Wert von 2,0 bis 5,0 und einer Temperatur von 50 bis 100°C, bis die Viskosität den gewünschten Wert aufweist, erhältlich sind.

EP 0 728 781 A2

**Beschreibung**

Die Erfindung betrifft hochviskose, Sulfonsäuregruppen enthaltende Kondensationsprodukte auf Basis von Aminos-triazinen mit wenigstens zwei Aminogruppen und Formaldehyd, deren Herstellung und deren Verwendung als Stabilisatoren für wäßrige Suspensionen, insbesondere wäßrige Bindemittelsuspensionen.

In der EP 336 165 B1 sind Sulfonsäuregruppen enthaltende Kondensationsprodukte auf Basis von Amino-s-triazin mit mindestens zwei Aminogruppen und Formaldehyd beschrieben, welche einen geringen freien Formaldehyd-Gehalt aufweisen. Diese Polykondensate werden aufgrund ihrer guten verflüssigenden Eigenschaften als Zusatzmittel für hydraulisch erhärtende Baustoffmischungen, wie z. B. Mörtel, Beton, Gips, Anhydrit usw., eingesetzt und sind dem Fachmann als sogenannte "Verflüssiger" oder "Fließmittel" bekannt. Ihre Wirkung beruht auf der Entflockung der als Baustoffmischungen vorliegenden Feststoffsuspensionen. Durch die Entflockung sind die Feststoffpartikel einzeln verteilt und beweglicher, wodurch es zu einer Erniedrigung der Fließgrenze, d. h. zu einer Viskositätsreduzierung kommt. Obwohl somit die dispergierende Wirkung dieser Fließmittel den zur Herstellung einer Suspension benötigten Energieeintrag vermindert, so wirkt doch die erniedrigte Viskosität des Gesamtsystems der Suspensionsstabilität entgegen.

Wesentlich für den Aufbau eines mechanisch stabilen Verbundes und damit für die spätere Qualität des Bauwerks ist eine homogene und fehlstellenfreie Verteilung des Bindemittels und der verschiedenen Zuschläge vor und während der Aushärtung.

Da sich Bindemittel und Zuschlagstoff in der Regel immer in der Korngrößenverteilung sowie der Dichte unterscheiden, kann es insbesondere bei der Verwendung von Fließmitteln zu Sedimentationserscheinungen und zu Absonderungen des Anmachwassers kommen. Diese Vorgänge sind dem Bauhandwerker als Absetzen bzw. Entmischen und Bluten bekannt.

Es hat deshalb nicht an Versuchen gefehlt, das Zusammenhaltevermögen anorganischer Baustoffsuspensionen zu verbessern. Zu diesem Zweck werden sogenannte Verdickungsmittel zugegeben, die im Gegensatz zu Fließmitteln die Viskosität des Gesamtsystems erhöhen.

Beispiele für gebräuchliche Verdicker sind Stärke- und Cellulosederivate wie z. B. die Methylether (Methylstärke, Methylcellulose) sowie die entsprechenden Mischether, die zusätzlich in unterschiedlichem Ausmaße hydroxypropyliert bzw. hydroxyethyliert sein können (Methylhydroxypropylcellulose, Methylhydroxyethylcellulose). Solche modifizierten Polysaccharide sind wegen ihrer vielen Hydroxylseitengruppen gut wasserlöslich. Sie erzielen ihre verdickende Wirkung durch die Viskositätserhöhung, die durch ihr hohes Molekulargewicht sowie durch die Ausbildung von Wasserstoffbrückenbindungen zu den OH-Substituenten zustande kommt.

Die Herstellung und Anwendung solcher Polysaccharidverdicker ist beschrieben in Houben-Weyl, Methoden der organischen Chemie, Band E 20/3, Makromolekulare Stoffe, Seiten 2042 ff (1987, Georg Thieme Verlage, Stuttgart - New York).

Ebenfalls durch Viskositätserhöhung verdickend wirken wasserlösliche Polyalkylenglykole, die durch Homo- oder Blockpolymerisation aus Ethylenoxid bzw. Propylenoxid hergestellt werden (vgl. Houben-Weyl, Band E 20/2, Seiten 1367 ff). Auch hier überträgt sich die Viskositätserhöhung des Wassers auf das Gesamtsystem und wirkt dem durch Gravitation bedingten Absetzen der Feststoffteilchen entgegen.

Nachteilig bei der Anwendung von Verdickern zur Suspensionsstabilisierung ist aber, daß die Wirksamkeit mit ausgeprägten Veränderungen der Rheologie und der Konsistenz der Baustoffmischungen, insbesondere mit einer Erhöhung der Fließgrenze und der Viskosität einhergeht. Zusätzlich kommt es je nach Dosierung zu einer unerwünschten Beeinflussung der Abbindeeigenschaften anorganischer Bindemittel, die sich in Form von Erstarrungs- und Erhärtungsverzögerungen äußert.

Ebenfalls von großem Nachteil ist der durch die Verdicker in der Regel verursachte Lufteintrag während des Mischvorganges. Die eingebrachten Luftporen erniedrigen die Dichte der Baustoffmischungen und führen deshalb zu reduzierten Druck- und Biegezugfestigkeiten des erhärtenden Baustoffs.

Der Erfindung liegt daher die Aufgabe zugrunde, neue Zusatzmittel für wäßrige Suspensionen bereitzustellen, welche die genannten Nachteile des Standes der Technik nicht aufweisen, sondern gute suspensionsstabilisierende Eigenschaften besitzen, ohne die anderen anwendungstechnischen Eigenschaften der wäßrigen Suspensionen, insbesondere anorganische Bindemittelsuspensionen, negativ zu beeinflussen.

Diese Aufgabe wird erfindungsgemäß durch hochviskose, Sulfonsäuregruppen enthaltende Kondensationsprodukte auf Basis von Amino-s-triazinen mit wenigstens zwei Aminogruppen und Formaldehyd gelöst, welche dadurch gekennzeichnet sind, daß sie als einen Feststoffgehalt von 20 Gew.-% aufweisende wäßrige Lösungen eine Viskosität von 500 bis 100 000 cP bei 20°C und einen pH-Wert von 8,0 bis 13,0 besitzen und durch

a) Kondensation von Amino-s-triazin, Formaldehyd und Sulfit im Molverhältnis 1 : 1,9 bis 2,9 : 0,7 bis 1,3 in wäßriger Lösung bei einem pH-Wert von 9,0 bis 12,0 und einer Temperatur von 50 bis 90°C, bis das Sulfit nicht mehr nachweisbar ist und

b) anschließende Weiterkondensation bei einem pH-Wert von 2,0 bis 5,0 und einer Temperatur von 50 bis 100°C, bis die Viskosität den gewünschten Wert aufweist, erhältlich sind.

Es hat sich überraschenderweise gezeigt, daß die erfindungsgemäßen Kondensationsprodukte sehr gute suspensionsstabilisierende Eigenschaften aufweisen, wobei die sedimentationsverhindernde Wirkung von keiner nennenswerten Viskositätserhöhung der wäßrigen Suspensionen begleitet ist.

Ein weiterer überraschender Effekt besteht darin, daß die erfindungsgemäßen Kondensationsprodukte nicht der für methylolgruppenhaltige Aminoplastharze typischen Vergelung unterliegen, sondern inkohärente reversible Kolloide darstellen, was sich im deutlich ausgeprägten Tyndall-Effekt ihrer wäßrigen Lösungen zeigt.

Ein weiterer Gegenstand der Erfindung ist das Verfahren zur Herstellung der vorstehend definierten Kondensationsprodukte. Das Herstellungsverfahren ist dadurch gekennzeichnet, daß man

a) Amino-s-triazin, Formaldehyd und Sulfit im Molverhältnis 1 : 1,9 bis 2,9 : 0,7 bis 1,3 in wäßriger Lösung bei einem pH-Wert von 9,0 bis 12,0 und einer Temperatur von 50 bis 90°C so lange kondensiert, bis das Sulfit nicht mehr nachweisbar ist und

b) anschließend bei einem pH-Wert von 2,0 bis 5,0 und einer Temperatur von 50 bis 100°C so lange weiterkondensiert, bis die Viskosität einer auf einen pH-Wert von 8,0 bis 13,0 alkalisch gestellten und einen Feststoffgehalt von 20 Gew.-% aufweisenden wäßrigen Lösung einen Wert von 500 bis 100 000 cP bei 20°C aufweist.

Als Amino-s-triazin mit mindestens 2 $NH_2$-Gruppen wird bevorzugt Melamin eingesetzt. Die Verwendung difunktioneller Amino-s-triazine, wie etwa Benzo- oder Acetoguanamin, der entsprechenden Guanaminsulfonsäure oder aber von Ammelin ist ebenfalls möglich. Generell können im Rahmen der vorliegenden Erfindung bis zu 50 Mol-% des Amino-s-triazins durch andere Aminoplastbildner ersetzt werden. Beispiele für geeignete andere Aminoplastbildner sind Harnstoffe, Dicyandiamid, Thioharnstoff, Guanidin(-Salze), Ethanolamin und andere Amine.

Als Aldehyd wird Formaldehyd, in der Regel in Form einer 30 %igen oder auch höherprozentigen wäßrigen Formalin-Lösung oder als Paraformaldehyd eingesetzt. Es ist im Rahmen der Erfindung jedoch auch möglich, bis zu 50 Mol-% des Formaldehyds durch Acetaldehyd oder Glyoxylsäure zu ersetzen.

Als Sulfite setzt man die üblichen Sulfite, wie etwa Alkali- und Erdalkalisulfite sowie deren Hydrogen- bzw. Pyrosulfite bevorzugt ein. Sie bewirken, daß die erfindungsgemäßen Kondensationsprodukte wasserlöslich bzw. wasserverträglich sind.

Anstelle der reinen Sulfitkomponente kann man auch eine Mischung aus dem Sulfit und anderen, anionische Gruppen einbringenden Reaktanden verwenden. Geeignet sind hierfür gegenüber Aldehyden reaktive Aminosulfonsäuren, wie etwa Sulfanilsäure oder Taurin, Amidosulfonsäure (Sulfamidsäure) und/oder Aminocarbonsäuren wie z. B. Glycin. Bis zu 50 Mol-% des Sulfits können durch diese anionischen Reaktanden ersetzt werden.

Es ist erfindungswesentlich, daß das Molverhältnis von Amino-s-triazin zu Formaldehyd zu Sulfit auf 1 : 1,9 bis 2,9 : 0,7 bis 1,3 eingestellt wird, um einerseits den für die erfindungsgemäßen Eigenschaften der Produkte notwendigen kolloidalen Aufbau zu gewährleisten und andererseits das zum Aufbau der inkohärenten Kolloide nötige Molekularwachstum ohne die Ausbildung von Vergelung sicherzustellen. Das bevorzugte Molverhältnis von Amino-s-triazin zu Formaldehyd zu Sulfit beträgt 1 : 2,0 bis 2,3 : 0,9 bis 1,1. Wenn Teile des Amino-s-triazins, des Formaldehyds oder des Sulfits durch andere Reaktanden, wie oben erwähnt, ersetzt werden, so gehen diese in das Molverhältnis äquimolar ein.

Die Kondensation wird in wäßriger Lösung durchgeführt. Die Gesamtkonzentration der Reaktionsmischung wird bevorzugt so eingestellt, daß das fertige Kondensationsprodukt mit einem Feststoffgehalt von 5 bis 25 Gew.-% anfällt.

Die Reihenfolge der Zugabe der Reaktionskomponenten in der ersten Stufe ist zwar nicht wesentlich, doch hat es sich im Hinblick auf die Reaktionsführung bzw. -kontrolle als vorteilhaft erwiesen, den Formaldehyd in wäßriger Lösung vorzulegen und nacheinander das Amino-s-triazin und die Sulfitkomponente in die Reaktionslösung einzutragen.

Der pH-Wert in der ersten Stufe wird auf 9,0 bis 12,0, vorzugsweise auf 10,5 bis 11,5, eingestellt. Dies kann mit üblichen alkalisch reagierenden Verbindungen oder Salzen, insbesondere Hydroxiden, erfolgen. Aus Kostengründen wird zur Einstellung des alkalischen pH-Werts vorzugsweise Natronlauge verwendet. Die pH-Werteinstellung kann auch in mehreren Stufen erfolgen. Die Reaktionstemperatur in der ersten Stufe wird auf 50 bis 90°C, vorzugsweise 60 bis 80°C, eingestellt, um eine wirtschaftlich günstige Reaktionszeit einhalten zu können. Die erste Stufe ist beendet, wenn das Sulfit mit üblichen Methoden praktisch nicht mehr nachweisbar ist.

Nach Abschluß der ersten Reaktionsstufe, die normalerweise nach 60 bis 180 Minuten beendet ist, wird in der zweiten Stufe der pH-Wert auf 2,0 bis 5,0 eingestellt und bei einer Temperatur von 50 bis 100°C weiterkondensiert.

Der saure pH-Wert in der zweiten Stufe, der vorzugsweise bei pH 3,0 bis 4,5 liegt, wird mit den üblichen Säuren oder sauer reagierenden Verbindungen oder Salzen eingestellt, wobei anorganische Mineralsalze und insbesondere Schwefelsäure aus Kostengründen bevorzugt eingesetzt werden. Werden anstelle eines Teils des Sulfits Sulfon- oder Carbonsäuren verwendet, so können diese in saurer Form zur pH-Einstellung herangezogen werden. Die benötigte Menge an Mineralsäuren reduziert sich entsprechend oder entfällt ganz. Ebenso können die Sulfon- oder Carbonsäuren in Form ihrer Salze eingesetzt werden.

Die Kondensationsreaktion ist beendet, wenn die Viskosität einer auf pH-Werte von 8,0 bis 13,0 alkalisch gestellten und auf 20 Gew.-% Feststoffgehalt abgedünnten wäßrigen Lösung einen Wert von 500 bis 100 000 cP bei 20°C aufweist (Brookfield-Synchro Lectric-Viskometer). Vorzugsweise beträgt diese Viskosität 1 000 bis 50 000 cP.

Hat das erfindungsgemäße Kondensationsprodukt die gewünschte Endviskosität in der zweiten Stufe erreicht, so wird die Reaktionslösung wieder alkalisch gestellt. Dies kann mit denselben Basen oder basisch reagierenden Verbindungen wie in der ersten Stufe, also insbesondere einem Hydroxid, vorzugsweise Natronlauge, erfolgen.

Nach Abschluß der Kondensation wird die Reaktionslösung abgekühlt. Sie weist einen pH-Wert von 8 bis 13 sowie einen bevorzugten Feststoffgehalt von 5 bis 25 Gew.-% auf. Das Produkt kann entweder direkt in flüssiger Form oder aber nach dem Sprühtrocknen als Pulver eingesetzt werden. Eine gemeinsame Sprühtrocknung mit anderen Substanzen, z. B. mit wäßrigen Lösungen von Fließmitteln, ist ebenfalls möglich.

Normalerweise weisen die erfindungsgemäßen Kondensationsprodukte von sich aus schon einen niedrigen freien Formaldehydgehalt < 0,01 Gew.-% auf. Es kann bei extremen Molverhältnissen jedoch vorkommen, daß der freie Formaldehydgehalt über diesem Wert liegt. In diesem Falle ist es im Rahmen der Erfindung möglich, im Anschluß an die Stufe b) eine Nachbehandlung im stark alkalischen Bereich bei pH $\geq$ 11,0 und einer Temperatur zwischen 50 und 100°C, vorzugsweise bei 60 bis 80°C, durchzuführen. In der Regel müssen pro Mol freisetzbaren Formaldehyds, der nach den Stufen a) und b) noch vorhanden ist, mindestens 0,5 Mol Hydroxid, z.B. in Form von Natriumhydroxid, verwendet werden. Anstelle von NaOH können auch andere übliche Hydroxide wie z. B. Calciumhydroxid eingesetzt werden. Diese stark alkalische Nachbehandlung, die schon in der EP 336 165 B1 beschrieben ist, wird in der Regel so lange durchgeführt, bis der freie Formaldehydgehalt sich nicht mehr verändert bzw. einen gewünschten Grenzwert erreicht hat, was in der Regel nach 5 bis 60 Minuten der Fall ist.

Die erfindungsgemäßen Kondensationsprodukte sind bei Raumtemperatur sowohl als Pulver als auch als Lösung mindestens 6 Monate bis 2 Jahre lagerstabil.

Aufgrund ihrer suspensionsstabilisierenden Eigenschaften eignen sich die hochviskosen Kondensationsprodukte der Erfindung hervorragend als Zusatzmittel für hydraulisch erhärtende Baustoffmischungen, wie z. B. Beton, Mörtel, Gips und Anhydrit etc., wobei sie sich besonders gut mit den üblichen Fließmitteln, insbesondere solchen auf Basis von konventionellen sulfonierten Melamin-Formaldehyd-Harzen (bevorzugtes Mengenverhältnis 5 : 1 bis 1 : 5), aber auch mit Naphthalinharzen bzw. polymeren Fließmitteln auf Acrylat-und Vinylbasis kombinieren lassen. Vorzugsweise werden sie hierbei in einer Menge von 0,01 bis 10 Gew.-%, vorzugsweise 0,1 bis 5 Gew.-%, bezogen auf den Feststoffgehalt der jeweiligen anorganischen Bindemittelsuspension eingesetzt.

Darüberhinaus können die erfindungsgemäßen Produkte generell zur Stabilisierung wäßriger Dispersionen, Emulsionen und Suspensionen wie z. B. von Polymer- und Reaktivharzdispersionen, filmbildenden Polymerdispersionen und Dispersionsfarben, Reaktivharzemulsionen und Pigmentsuspensionen eingesetzt werden.

Die nachfolgenden Beispiele sollen die Erfindung näher erläutern.

Beispiele

Tabelle 1

| Herstellungsbeispiele 1 bis 12 | | | | | | | |
|---|---|---|---|---|---|---|---|
| Molverhältnisse | | | | | | | |
| Beispiel | Melamin | Harnstoff | Acetogua-namin | Formalde-hyd | Natriumpy-rosulfit | Sulfanil-säure | Amidosul-fonsäure |
| 1 | 1,0 | | | 2,9 | 1,0 | | |
| 2 | 1,0 | | | 2,3 | 1,0 | | |
| 3 | 0,8 | 0,2 | | 1,9 | 0,8 | | |
| 4 | 0,75 | | 0,25 | 1,8 | 0,75 | | |
| 5 | 1,0 | | | 1,9 | 1,0 | | |
| 6 | 1,0 | | | 2,9 | 0,7 | | |
| 7 | 1,0 | | | 2,9 | 1,3 | | |
| 8 | 1,0 | | | 2,2 | 0,8 | 0,2 | |
| 9 | 1,0 | | | 2,1 | 0,8 | | 0,2 |
| 10 | 0,8 | 0,2 | | 2,2 | 0,8 | 0,2 | 0,2 |
| 11 | 1,0 | | | 1,9 | 0,9 | | |
| 12 | 1,0 | | | 2,1 | 1 | | |

Allgemeine Vorschrift

In einem 2 Liter Dreihalskolben mit Rührer, Rückflußkühler und Tropftrichter werden Melamin, Formaldehyd sowie Wasser I vorgelegt und mit Natronlauge I alkalisch gestellt.

Im Falle des teilweisen Ersatzes des Melamins durch andere Aminoplastbildner werden diese zusammen mit dem Melamin eingetragen. Im Falle des teilweisen Ersatzes des Formaldehyds durch andere Aldehyde gelangen diese zusammen mit dem Formaldehyd zum Einsatz.

Anschließend wird das Sulfit portionsweise in die Reaktionslösung eingetragen und diese dann auf 70 bis 80°C aufgeheizt. Sobald kein Sulfit mehr nachweisbar ist, wird die Lösung ggf. zunächst durch Eintrag der Sulfon- bzw. Carbonsäuren sauer gestellt, worauf sich dann die Zugabe der Schwefelsäure anschließt. Wird keine Sulfon- bzw. Carbonsäure eingesetzt, so wird nur mit Schwefelsäure sauer gestellt. Anschließend wird mit Wasser II zur Kondensation abgedünnt.

Man kondensiert bei 80°C bis die Viskosität einer zuvor auf pH-Werte von 8 bis 13 alkalisch gestellten und auf 20 Gew.-% Feststoffgehalt verdünnten Lösung die in Tabelle 2 angegeben Werte erreicht hat. Anschließend wird der gesamte Ansatz mit Natronlauge II alkalisch gestellt.

Tabelle 2

| Einwaagen [%] | Beispiel | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Formaldehyd, 30 %ig | 163,0 | 129,2 | 134,8 | 124,7 | 106,8 | 163,0 | 163,0 | 120,8 | 118,1 | 110,0 | 106,8 | 114,6 |
| Wasser I | 155,3 | 155,3 | 150,7 | 115,1 | 155,3 | 150,7 | 150,7 | 150,7 | 155,5 | 122,7 | 155,3 | 150,8 |
| Natronlauge I | 13,5 | 13,5 | 13,7 | 12,5 | 13,5 | 13,7 | 13,7 | 13,7 | 13,7 | 9,8 | 13,5 | 13,1 |
| Melamin | 70,8 | 70,8 | 70,8 | 65,9 | 70,8 | 70,8 | 70,8 | 70,8 | 70,8 | 50,4 | 70,8 | 68,7 |
| Harnstoff | - | - | 8,4 | - | - | - | - | - | - | 6,0 | - | - |
| Acetoguanamin | - | - | - | 21,8 | - | - | - | - | - | - | - | - |
| Natriumpyrosulfit | 53,1 | 53,1 | 53,1 | 49,4 | 53,1 | 37,4 | 69,4 | 42,7 | 42,7 | 38,0 | 47,8 | 51,5 |
| Sulfanilsäure | - | - | - | - | - | - | - | 19,5 | - | 17,3 | - | - |
| Amidosulfonsäure | - | - | - | - | - | - | - | - | 10,9 | 9,7 | - | - |
| Schwefelsäure | 64,0 | 59,6 | 84,2 | 64,7 | 70,4 | 45,4 | 102,8 | 72,6 | 35,2 | 13,0 | 80,3 | 65,4 |
| Wasser II | 264,7 | 264,7 | 263,4 | 345,1 | 264,7 | 253,8 | 306,8 | 279,9 | 265,0 | 266,7 | 264,7 | 257,0 |
| Natronlauge II | 56,0 | | 79,1 | 57,3 | 66,0 | 31,6 | 129,1 | 92,0 | 69,0 | 47,9 | 71,7 | 55,6 |
| Ausgangsfeststoff [%] | 24,4 | 24,2 | 24,8 | 24,2 | 24,0 | 23,3 | 24,8 | 24,7 | 24,1 | 24,8 | 23,5 | 24,1 |
| Endviskosität [cP], 20 %ige Lsg. bei 20 °C | 663 | 800 | 4700 | 2520 | 7300 | 22000 | 1100 | 60700 | 38300 | 550 | 1080 | 8600 |
| Feststoffgehalt der fertigen Lösung [%] | 21,8 | 21,9 | 22,5 | 22,8 | 20,7 | 21,4 | 22,3 | 22,2 | 21,9 | 21,9 | 21,7 | 21,6 |

EP 0 728 781 A2

Anwendungsbeispiele

Anwendungsbeispiel 1

Sedimentations- und Entmischungserscheinungen können an erhärtenden Mörteln durch vertikales Spalten oder Sägen geeigneter Probekörper entlang der Mittelachse festgestellt werden. Die Prüfung erfolgt dabei nach Augenschein bzw. durch Auszählen des Grobkorns in gleich großen unteren und oberen Bereichen. Zu diesem Zweck wurde eine Vergußmörtelrezeptur nach Tabelle 3a hergestellt.

Tabelle 3a

| Mörtelmischung auf Basis von Portlandzement PZ 55 | |
| --- | --- |
| Basisrezeptur | alle Einwaagen in [g] |
| Portlandzement PZ 55 | 900 |
| Sand (0 - 4 mm) | 1 350 |
| Denka CSA 20 | 31,5 |
| Fließmittel | 9,0 |

Als Fließmittel wurde Melment L1O$^R$ der SKW Trostberg, ein sulfoniertes Melamin-Formaldehyd-Harz, verwendet. Denka CSA 20 ist ein handelsübliches Expansionsadditiv auf Calciumsulfoaluminatbasis. Der als Zuschlag eingesetzte Sand wurde durch separate Einwaage der einzelnen Korngrößenfraktionen (vgl. Tabelle 4) in jeweils identischer Korngrößenverteilung eingesetzt.

Die Mörtel wurden nach Tabelle 3a angemacht, wobei durch Variation des W/Z-Wertes auf gleiche Konsistenz (Fließmaß, Hägermann-Trichter) eingestellt wurde.

Tabelle 3b

| Kontrollbeispiel mit Antiabsetzmittel | | |
| --- | --- | --- |
| Kondensationsprodukt nach Beispiel 2 | - | 4,5 [g] |
| W/Z$^1$ | 0,35 | 0,42 |
| Fließmaß [cm] | 32,5 | 32,5 |

$^{1)}$W/Z = Wasser-Zementwert

Nach dem Erhärten wurden die zylindrischen Probekörper vertikal zersägt (Abbildungen la und lb).

Das Schliffbild zeigt, daß beim Kontrollversuch (Abbildung la) starke Sedimentation insbesondere des Grobkorns eingetreten ist.

Durch Zusatz des erfindungsgemäßen Kondensationsprodukts nach Herstellungsbeispiel 2 konnte eine wesentlich homogenere Verteilung der Zuschlagstoffe bei gleicher Mörtelkonsistenz erzielt werden (Abbildung lb).

Anwendungsbeispiel 2a

Der Nachweis der sedimentationsverhindernden Wirkung wurde ebenfalls in einer Fließestrichrezeptur auf Basis eines großtechnischen REA-Anhydrits (Rauchgasentschwefelungs-Anhydrit) erbracht. Die maximale Korngröße dieses Anhydrits war < 100 μm (0,1 mm), wobei 50 % eine Korngröße < 21 μm und 90 % < 54 μm besaßen. Als Anreger wurde Kaliumsulfat verwendet.

Der als Zuschlag eingesetzte Sand wurde gemäß Tabelle 4 in die einzelnen Korngrößenfraktionen ausgesiebt. Jede Fraktion wurde einzeln eingewogen, um Entmischungsfehler auszuschließen.

Tabelle 4

| Korngrößenverteilung, Sand 0 - 4 mm | | |
|---|---|---|
| mm | Anteil [g] | Anteil [%] |
| > 4 | 135 | 10,00 |
| 4 - 2 | 378 | 28,00 |
| 2 - 1 | 297 | 22,00 |
| 1 - 0,5 | 243 | 18,00 |
| 0,5 - 0,25 | 202,5 | 15,00 |
| 0,25 - 0,125 | 94,5 | 7,00 |
| Summe | 1350,0 | 100,00 |

Der Fließestrich setzte sich nach Tabelle 5 zusammen. Das Anmischen erfolgte nach dem RILEM CEM Mischprogramm (DIN 1164). Alle Mischungen wurden durch Variation der Anmachwassermenge auf gleiche Konsistenz eingestellt. Als Anreger wurde Kaliumsulfat (1 Gew.-% bezogen auf Anhydrit) verwendet, als Fließmittel Melment L1O$^R$ der SKW Trostberg AG (1 Gew.-% bezogen auf Anhydrit).

Die erfindungsgemäßen Kondensationsprodukte nach den Herstellungsbeispielen 2 und 12 wurden mit 0,5 Gew.-% bezogen auf Anhydrit dosiert. Die Einstellung gleicher Konsistenz wurde durch Variation des Wasser/Anhydrit-Werts vorgenommen und durch Fließmaßmessungen (Hägermann-Trichter) überprüft.

Tabelle 5a

| Fließestrichmischung auf REA-Anhydritbasis | |
|---|---|
| Basisrezeptur | alle Einwaagen in [g] |
| REA-Anhydrit | 675 |
| Sand (0-4 mm) | 1 350 |
| Kaliumsulfat | 6,75 |
| Fließmittel | 6,75 |

| Tabelle 5b | Kontroll-beispiel | Kondensation-sprodukt nach Beispiel | |
|---|---|---|---|
| | | 2 | 12 |
| Kondensationsprodukt (erfindungsgemäß) [g] | - | 3,375 | 3,375 |
| Wasser [g] | 300 | 325 | 325 |
| Fließmaß [cm] | 30,0 | 29,9 | 30,5 |

Nach dem Anmachen wurde die Fließestrichmischung in längsseitig zerlegbare, zylindrische Edelstahlformen (Höhe 15,2 cm; Durchmesser 7,6 cm, Volumen 690 ml) eingefüllt und dort 20 Stunden bis zur Ausbildung einer plastischen Konsistenz belassen, jedoch nicht gehärtet.Nach Erreichen der plastischen Konsistenz konnte ausgeschalt werden. Man erhielt standfeste zylindrische Probekörper, die mit Hilfe eines großen Laborspatels ohne großen Kraftaufwand horizontal in 2 gleichgroße Hälften (obere und untere Hälfte) geteilt werden konnten. Unmittelbar darauf wurde jede Hälfte für sich quantitativ unter fließendem Wasser über einen Siebsatz (Maschenweite > 4 bis 0,125 mm, vgl. Tabelle 4) digeriert. Dabei wurde der gesamte Anhydritanteil aufgrund seiner kleinen Partikelgröße ausgewaschen, so daß nur der eingesetzte Sand nach Korngrößen fraktioniert übrigblieb. Nach dem Trocknen auf Gewichtskonstanz wurden die einzelnen Siebinhalte ausgewogen, pro Korngrößenfraktion auf 100 % normiert und im Vergleich "obere Hälfte" zu "untere Hälfte" in Beziehung gesetzt (Tabelle 6).

Tabelle 6

| Vergleich der Sandfraktionen, pro Korngrößenfraktion auf 100 % normiert | | | |
|---|---|---|---|
| obere Hälfte der Probekörper | | | |
| Korngröße in [mm] | Kontrollversuch | mit Produkt nach Beispiel 2 | mit Produkt nach Beispiel 12 |
| > 4 | 26,5 | 41,8 | 40,9 |
| 4 - 2 | 39,1 | 47,9 | 47,9 |
| 2 - 1 | 46,3 | 50,0 | 53,8 |
| 1 - 0,5 | 52,2 | 52,4 | 52,8 |
| 0,5 -0,25 | 49,7 | 48,1 | 51,3 |
| 0,25-0,125 | 55,9 | 47,2 | 51,8 |
| | | | |
| untere Hälfte der Probekörper | | | |
| Korngröße in [mm] | Kontrollversuch | mit Produkt nach Beispiel 2 | mit Produkt nach Beispiel 12 |
| > 4 | 73,5 | 58,2 | 59,1 |
| 4 - 2 | 60,9 | 52,1 | 52,1 |
| 2 - 1 | 53,7 | 50,0 | 46,2 |
| 1 - 0,5 | 47,8 | 47,6 | 47,2 |
| 0,5 -0,25 | 50,3 | 51,9 | 48,7 |
| 0,25-0,125 | 44,1 | 52,8 | 48,2 |

Während sich beim Kontrollversuch 73,5 % der Sandfraktion mit Korngrößen > 4 mm in die untere Hälfte des Probekörpers abgesetzt hatten und nur 26,5 % in der oberen Hälfte verblieben, betragen diese Werte für die beiden mit den erfindungsgemäßen Kondensationsprodukten nach den Herstellungsbeispielen 2 und 12 formulierten Proben 58,2 % (unten) zu 41,8 % (oben) bzw. 59,1 % (unten) zu 40.9 % (oben).

Eine analoge Verteilung ergibt sich beim Sand der Korngröße 2 bis 4 mm, bei dem ebenfalls die beiden mit den erfindungsgemäßen Produkten versetzten Versuche näher an der idealen 50/50-Verteilung (oben/unten) liegen als der Kontrollversuch.

Das Beispiel zeigt, daß die erfindungsgemäßen Kondensationsprodukte die Sedimentation der großen Zuschlagteilchen (2 bis 4 mm und > 4 mm) deutlich verringern.

Anwendungsbeispiel 2b

Um die sedimentative Schichtung des Fließestrichs einschließlich des Feinanteils (Anhydrit) zu bestimmen, wurden in analoger Weise zu Beispiel 2a erneut zylindrische Probekörper angefertigt, diesmal aber zur Erhärtung gebracht.

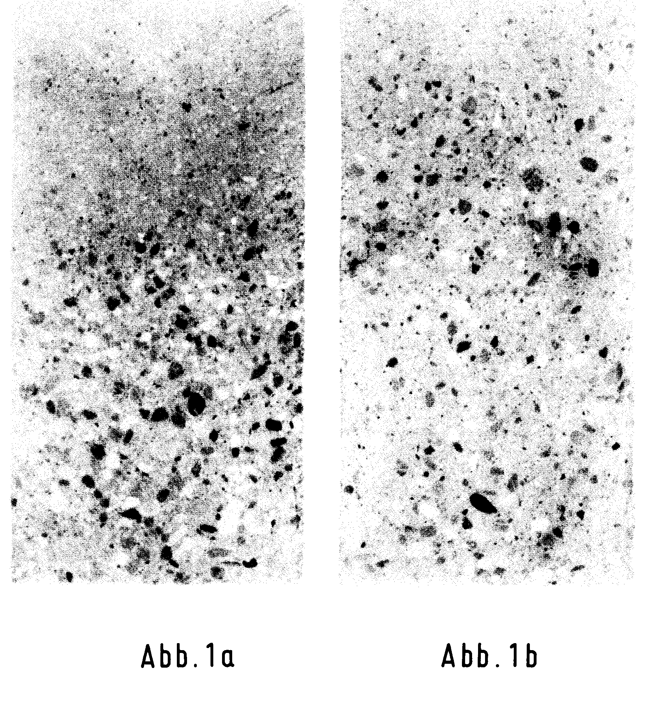

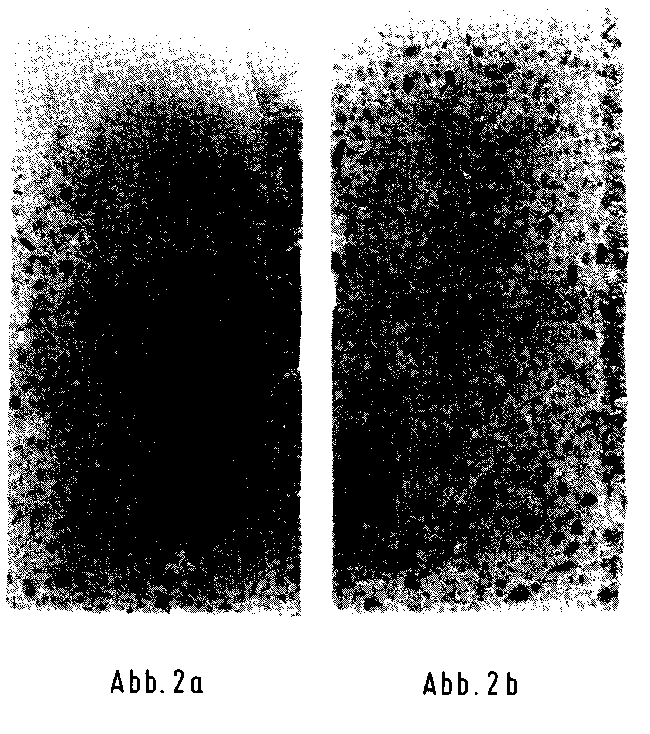

Nach vollständiger Erhärtung (IO Tage bei 20°C, dann weitere 3 Tage bei 40°C bis zur Gewichtskonstanz) wurden die Probekörper vertikal zersägt (Abbildungen 2a und 2b).

Das Schliffbild zeigt in Übereinstimmung mit dem vorhergehenden Versuch, daß beim Kontrollbeispiel (Abbildung 2a) starke Sedimentation des Zuschlags eingetreten ist. Die größeren Sandkörner sind dabei als Partikel gut zu erkennen. Das starke Sedimentieren der im Vergleich zum Anhydrit größeren Sandkörner führt zwangsläufig zur Ausbildung einer deutlich abgesetzten Feinanteilschicht an der Oberseite des Probekörpers, die im wesentlichen aus Anhydrit besteht.

Durch Zusatz der erfindungsgemäßen Kondensationsprodukte (hergestellt nach Beispiel 12) wird die Ausbildung einer solchen Feinanteilschicht an der Oberseite völlig verhindert (Abbildung 2b). Stattdessen zeigt das Schliffbild über die gesamte Schnittfläche des Probekörpers eine gut homogene Verteilung von Bindemittel und Zuschlag.

Aufschwimmende Feinanteilschichten wie im Kontrollbeispiel (Abb. 2a) abgebildet, werden als Hautbildung bezeichnet. Sie führen beim Verlegen von Anhydritfließestrich zu großen Problemen, da sie einerseits durch ihre Dichtigkeit und Härte (hoher Bindemittelanteil) den Trocknungsverlauf signifikant verzögern, so daß keine weitere Belegung oder Beschichtung des Estrichs, z. B. mit Fliesen, Reaktionsharzen oder Teppichböden, erfolgen kann.

Andererseits neigen sie aufgrund fehlender Magerung (d.h. fehlenden Sands, Zuschlaganteils) zu Sprödigkeit und damit zu Spannungsrissen. In der Praxis müssen solche Feinanteilschichten deswegen häufig mit hohem Kostenaufwand abgeschliffen werden.

Anwendungsbeispiel 2c

Der Nachweis, daß die erfindungsgemäßen Harze ihre sedimentationsverhindernde Wirkung ohne Verdickung der Bindemittelsuspension entfalten, wurde durch die Bestimmung des zeitabhängigen Fließmaßes geführt. Zum Einsatz kam die Rezeptur nach Tabelle 5 (Kontrollbeispiel und Fließestrich mit Zusatz nach Herstellungsbeispiel 12). Das Fließmaß wurde nach üblicher Praxismethode mit dem Hägermann-Trichter bestimmt, wobei nach dem Abheben des Trichters der Durchmesser des auf einer Glasplatte auseinandergelaufenen Mörtels gemessen wird. Die für die zeitabhängige Messung eingesetzte Mischung wurde vor jeder Messung erneut eine Minute aufgerührt und zwischen den Messungen abgedeckt aufbewahrt. Die Ergebnisse sind in Tabelle 7 zusammengefaßt.

Tabelle 7

| Zeitabhängige Fließfähigkeit, Fließmaß in [cm] | | | | | |
|---|---|---|---|---|---|
| | sofort | nach 30 min | nach 1 Std. | nach 2 Std. | nach 3 Std. |
| Kontrollbeispiel | 30,1 | 30,7 | 30,5 | 30,6 | 30,4 |
| mit Produkt nach Beispiel 12 | 29,6 | 29,6 | 29,1 | 28,8 | 28,5 |

Während beim Kontrollbeispiel an den Rändern des Mörtelkuchens teilweise Wasserseparation (Bluten) auftrat, zeigte die mit dem erfindungsgemäßen Kondensationsprodukt versetzte Fließestrichmischung über den gesamten Zeitraum einen sämigen und zusammenhängenden Verlauf ohne Entmischungserscheinungen.

Anwendungsbeispiel 2d

Zum Nachweis, daß die erfindungsgemäßen Produkte den Trocknungsverlauf von Anhydritfließestrichen deutlich verbessern, wurde das Austrocknungsverhalten von Probekörpern über einen Zeitraum von 4 Wochen verfolgt.

Zum Einsatz kamen eingeschalte Probekörper der Dimension 22,5 x 15,0 x 4,7 cm (Länge/Breite/Höhe), wobei eine Wasserabgabe nur durch die nicht eingeschalte Oberfläche (337,5 cm$^2$) möglich war.

Der dazu verwendete Testmörtel hatte folgende Zusammensetzung (Tabelle 8):

Tabelle 8a

| alle Einwaagen in [g] | |
|---|---|
| REA-Anhydrit | 1 350 |
| Sand (0 - 4 mm) | 2 700 |
| Kaliumsulfat | 13,5 |
| Melment L1O$^R$ | 13,5 |

Die Konsistenz des Kontrollversuchs und des Versuchs mit dem erfindungsgemäßen Produkt nach Herstellungsbeispiel 12 wurde durch Variation des Wasser/Anhydritwerts auf gleiche Werte eingestellt (Tabelle 8b).

Tabelle 8b

| Kontrollversuch alle Einwaagen in [g] | | |
|---|---|---|
| Kondensationsprodukt nach Beispiel 12 | - | 6,75 |
| Wasser | 500 | 581 |
| Fließmaß [cm] | 28,0 | 28,4 |

Die Probekörper wurden bei konstanten Bedingungen (20°C, 65 % relative Luftfeuchtigkeit) gelagert und der durch Austrocknen entstehende Wasserverlust durch tägliches Wiegen über einen Zeitraum von 27 Tagen bestimmt.

Nach 4 Wochen wurde bei 40°C bis zur Gewichtskonstanz getrocknet. Anhand dieses Wertes wurde der kumulierte prozentuale Wasserverlust berechnet und in Tabelle 9 als Restwassergehalt, bezogen auf den Gesamtgehalt nichtgebundenen Wassers, gegenübergestellt.

Tabelle 9

| Trocknungsverlauf von Anhydritfließestrich Restwassergehalt in [%] | | |
|---|---|---|
| nach ... Tag(en) | Kontrollbeispiel | mit Antiabsetzmittel nach Herstellungsbeispiel 12 |
| 0 | 100,00 | 100,00 |
| 1 | 68,3 | 77,4 |
| 2 | 61,0 | 64,6 |
| 3 | 59,1 | 59,9 |
| 6 | 52,2 | 45,9 |
| 7 | 50,4 | 42,4 |
| 8 | 48,1 | 39,1 |
| 9 | 47,5 | 36,6 |
| 10 | 46,5 | 34,2 |
| 13 | 41,7 | 27,0 |
| 14 | 40,7 | 25,1 |
| 15 | 40,5 | 23,9 |
| 16 | 40,0 | 22,4 |
| 17 | 37,9 | 20,2 |
| 20 | 36,3 | 17,1 |
| 21 | 35,6 | 16,1 |
| 22 | 35,1 | 15,1 |
| 23 | 33,3 | 13,4 |
| 24 | 32,6 | 12,5 |
| 27 | 30,6 | 10,1 |

Das Beispiel zeigt, daß der mit dem erfindungsgemäßen Produkt nach Herstellungsbeispiel 12 versetzte Anhydritfließestrich ein weitaus besseres Austrocknungsverhalten besitzt. Bereits nach 6 Tagen setzt eine beschleunigte Wasserabgabe ein. Nach 27 Tagen ist der verbleibende Restwassergehalt mit 10,1 % deutlich geringer als mit 30,6 % beim Kontrollversuch.

Anwendungsbeispiel 3

Das Beispiel beschreibt die Wirksamkeit der erfindungsgemäßen Produkte gegen Absonderung von Anmachwasser an Mörteloberflächen (Bluten).

Der Test für Zementleim wurde nach den Richtlinien für die Erteilung von Zulassungen für Betonzusatzmittel, Fassung Juni 1993, Abs. 7.5.1.4: Wirksamkeit von Stabilisierern (ST) durchgeführt.

Dazu wurden 0,9 l der Zementleimmischung mit einem Wasser/Zement-Wert (W/Z) von 0,6 in einen 1-Liter-Meßzylinder eingefüllt. Die Absonderung von Wasser wurde nach 0,5, 2 und 5 Stunden registriert. Die Dosierung der erfindungsgemäßen Produkte nach den Herstellungsbeispielen 3 und 4 betrug jeweils 0,5 Gew.-% bezogen auf Zement. Verwendeter Zement: HOZ 35 L HS NW Na Montafirm

Tabelle 10

|  | Wasserabsonderung in [ml] nach | | |
|---|---|---|---|
|  | 0,5 Std. | 2 Std. | 5 Std. |
| Kontrollbeispiel | 20 | 60 | 60 |
| mit Produkt nach Beispiel 3 | 3 | 25 | 30 |
| mit Produkt nach Beispiel 4 | 3 | 28 | 33 |

Das Beispiel zeigt die Reduzierung des Blutwassers durch die erfindungsgemäßen Produkte im Wirksamkeitstest für zementgebundene Mörtel und Betone.

Anwendungsbeispiel 4

In analoger Weise wurden die stabilisierenden Eigenschaften der erfindungsgemäßen Kondensationsprodukte in einer REA-Anhydrit-Sand-Abmischung getestet (Zusammensetzung siehe Tabelle 11). Als Fließmittel wurde Melment L1O$^R$ verwendet, als stabilisierender Zusatz ein Kondensationsprodukt entsprechend dem Herstellungsbeispiel 9.

Tabelle 11a

| Mörtelmischung auf REA-Any-hdritbasis | |
|---|---|
| Basisrezeptur | alle Einwaa-gen in [g] |
| REA-Anhydrit | 675 |
| Sand (0-4 mm) | 1 350 |
| Kaliumsulfat | 6,75 |
| Fließmittel | 3,375 |

| Tabelle 11b | Kontrollversuch | Beispiel 4a | Beispiel 4b |
|---|---|---|---|
| stabilisierender Zusatz nach Beispiel 9 [g] | - | 1,69 | 1,69 |
| Anmachwasser [g] | 325 | 325 | 367 |
| Wasser/Bindemittel-Wert | 0,4815 | 0,4815 | 0,5437 |
| Fließmaß in [cm] (Hägermann-Trichter) | 27,3 | 21,3 | 27,1 |

Während Beispiel 4a den gleichen Wasser/Bindemittelwert wie der Kontrollversuch aufweist, wurde in Beispiel 4b durch vermehrten Wasserzusatz auf gleiche Konsistenz eingestellt.

Es wurden 900 cm$^3$ der Mörtelmasse in 1 l-Standzylinder eingefüllt und das sich absondernde Blutwasser nach 30 Minuten sowie nach 1, 2 und 5 Stunden gemessen (Tabelle 12).

Tabelle 12

|  | Wasserabsonderung in [ml] nach | | | |
|---|---|---|---|---|
|  | 0,5 Std. | 1 Std. | 2 Std. | 5 Std. |
| Kontrollversuch | 20 | 30 | 35 | 35 |
| Beispiel 4a | 0 | 3 | 7 | 13 |
| Beispiel 4b | 3 | 5 | 7 | 22 |

Das Beispiel zeigt die stabilisierende Wirksamkeit der erfindungsgemäßen Produkte in REA-Anhydrit-Abmischungen.

Anwendungsbeispiel 5

Die Härtung mineralischer Baustoffe wird in der Regel durch Messung der Oberflächenhärte oder der Druckfestigkeit von Probekörpern (z. B. 10 x 10 cm Würfel) bestimmt. Beispiel 5 weist nach, daß die erfindungsgemäßen Kondensationsprodukte den Härtungsverlauf zementärer oder Anhydrit-basierender Bindemittel nicht negativ beeinflussen.

Die Bestimmung der Druckfestigkeit und der Shore D-Härte erfolgte an Anhydrit-Abmischungen nach Tabelle 11, Beispiel 4a (gleicher W/Z wie beim Kontrollversuch). Zum Einsatz kam das Produkt hergestellt nach Beispiel 2. Die Werte sind in Tabelle 13 aufgelistet.

Tabelle 13

|  | Dichte in [kg/dm$^3$] | Druckfestigkeit in [N/mm$^2$] nach | | Shore D-Härte nach | | |
|---|---|---|---|---|---|---|
|  |  | 3 Tagen | 7 Tagen | 1 Tag | 3 Tagen | 7 Tagen |
| Kontrollversuch | 2,160 | 18,2 | 19,0 | 51 | 73 | 76 |
| mit Produkt nach Bsp. 2 | 2,174 | 19,7 | 20,2 | 47 | 74 | 78 |

Das Beispiel zeigt, daß die erfindungsgemäßen Produkte keinerlei Luft in die Mischung eintragen. Die Rohdichte wird nicht reduziert. Darüberhinaus weisen die Produkte keine abbindeverzögernden Eigenschaften auf.

Die abbindeneutralen Eigenschaften der erfindungsgemäßen Kondensationsprodukte auch gegenüber zementären Systemen wurden durch die Messung der Hydratationswärme von Portlandzement PZ 35 F bei einem W/Z von 0,35 nachgewiesen.

Tabelle 14

| Hydratationswärme-Entwicklung von Portlandzement 35 F | | | |
|---|---|---|---|
|  | Dosierung | maximale Temperatur in [°C] | erreicht nach ... Stunden |
| Kontrollversuch | - | 78 | 11,5 |
| mit Produkt nach Bsp. 2 | 0,5 Gew.-% auf Zement | 84 | 11,0 |

Eine Abbindeverzögerung würde sich durch niedrigeres Temperaturmaximum und späteres Auftreten dieses Maximums zeigen.

Anwendungsbeispiele 6 und 7

Wasserrückhaltung

Die Rückhaltung (Wasserretention) von Anmachwasser in Mörtel- oder Betonmischungen ist ein in der Bauindustrie häufig auftretendes Problem. Insbesondere bei Mörtelanwendungen in dünnen Schichten, wie sie beim Einsatz von sogenannten Ausgleichsmassen oder etwa Fliesenklebern auf Zementbasis vorkommen, besteht die Gefahr der Austrockhung des Mörtels ("Verdursten") durch die großen Oberflächen.

Zur Bestimmung des Wasserrückhaltevermögens wird eine Mörtelmischung in Anlehnung an DIN 1164 hergestellt. Die Menge des Anmachwassers wird so gewählt, daß man auf dem Ausbreittisch ein Ausbreitmaß von 18 ± 1 cm erhält. Flüssige Zusätze werden dem Anmachwasser und feste Zusätze dem Bindemittel beigemischt.

Der so hergestellte Mörtel wird sofort nach Bestimmung des Ausbreitmaßes in die vorher mit einem angefeuchteten Filterpapier (Schleicher & Schüll Nr. 1574, mittelschnell, $\varnothing$ 17 cm) ausgelegte und gewogene Nutsche eingefüllt und mit einem Abstreichlineal bündig abgestrichen. Das gefüllte Nutschenoberteil wird nun erneut gewogen und dann an eine Saugflasche angeschlossen. Es wird genau 2 Minuten mit einem Druck von 250 mbar abgesaugt. Anschließend wird das Gewicht der Nutsche mit dem abgesaugten Mörtel wiederum bestimmt. Das im Mörtel verbliebene Wasser (Wasserrückhaltevermögen) wird in % angegeben.

Berechnung:

$$W = \frac{\left[\dfrac{G_1 - G_0}{M} \cdot w\right] - [G_1 - G_2]}{\dfrac{G_1 - G_0}{M} \cdot w} \times 100$$

| | |
|---|---|
| W | = Wasserrückhaltevermögen in % |
| $G_0$ | = Gewicht der leeren Nutsche + angefeuchtetes Filter |
| $G_1$ | = Gewicht der Nutsche vor dem Absaugen |
| $G_2$ | = Gewicht der Nutsche nach dem Absaugen |
| M | = Gewicht der Gesamtmörtelmischung |
| w | = Gewicht des Anmachwassers |

Anwendungsbeispiel 6

Die Mörtelrezeptur ist in Tabelle 15 angegeben, die Testwerte des Wasserrückhaltetests sind in Tabelle 16 aufgelistet.

Tabelle 15

| Mörtelrezeptur, W/Z = 0,5, Einwaagen in [g] | |
|---|---|
| Portlandzement PZ 35 | 450 |
| Normensand | 1 350 |
| Anmachwasser | 225 |

Tabelle 16

| Wasserrückhaltung | | |
|---|---|---|
| | Dosierung | W |
| Kontrollversuch | - | 57,2 |
| Produkt nach Bsp. 7 | 2 Gew.-% | 64,8 |
| Produkt nach Bsp. 7 | 3 Gew.-% | 82,6 |
| Produkt nach Bsp. 7 | 4 Gew.-% | 93,7 |

Neben der Absaugmethode kann das Wasserrückhaltevermögen auch in Mörteln oder Zementleimen getestet werden, die für Mauerputze, Gasbetonverklebungen oder Dichtmassen auf stark saugenden Untergründen eingesetzt werden. Dies soll durch die Verklebung von Gasbetonwürfeln mit Zementleim gezeigt werden.

Anwendungsbeispiel 7

Zu 100 g Portlandzement PZ 35 F werden 4 M.-% (Feststoff) des Zusatzmittels zugegeben. Nun fügt man soviel Wasser hinzu bis insgesamt ein Wassergehalt von 36 M.-% erreicht ist. Das Wasser der Prüflösung, falls flüssig dosiert, ist zu berücksichtigen. Anschließend wird der Zementleim 30 bis 60 Sekunden intensiv gerührt. Mit dem so erhaltenen Zementleim setzt man jeweils 3 Verklebungen mit den luftgetrockneten, staubfreien Gasbetonwürfeln an.

Ein Teil des Zementleims wird auf die Stirnfläche eines Gasbetonwürfels aufgebracht und ein zweiter Gasbetonwürfel auf den Zementleim gedrückt. Nach 24 Stunden erfolgt die Prüfung der Verklebung durch Auseinanderbrechen von Hand. Die Bewertung wird nach dem Bruchbild vorgenommen, wobei nur Klebewirkungen von 4 bis 6 für die Praxis geeignet sind.

| | |
|---|---|
| Klebewirkung 6 | Bruch im Gasbeton bzw. nicht auseinanderzubrechen |
| Klebewirkung 5 - 6 | Bruch teils im Gasbeton, teils in der Fuge |
| Klebewirkung 5 | Bruch in der Fuge, sehr schwer zu brechen |
| Klebewirkung 4 | Bruch in der Fuge, schwer zu brechen |
| Klebewirkung 3 | Bruch in der Fuge, leicht zu brechen |
| Klebewirkung 2 | Fast keine Haftung |
| Klebewirkung 1 | Keine Haftung |

Tabelle 17

| Gasbetonverklebung | |
|---|---|
| Kontrollversuch | Klebewirkung 2 |
| Zementleim mit Produkt nach Herstellungsbeispiel 5 | Klebewirkung 4 |
| Zementleim mit Produkt nach Herstellungsbeispiel 2 | Klebewirkung 5 - 6 |

Zementleime mit guter Wasserretention geben kein Wasser an den saugfähigen Gasbeton ab und zeigen daher hohe Klebewirkungen. Wird das Wasser aus dem Zementleim in den Haftgrund gesaugt, dann kann der Zement nicht mehr vollständig abbinden und es tritt keine Verklebung ein (Kontrollversuch).

Die Beispiele 6 und 7 zeigen die wasserrückhaltenden Eigenschaften der erfindungsgemäßen Kondensationsprodukte.

Anwendungsbeispiel 8

Zusammenhaltevermögen

Beim Betonieren unter Wasser darf kein Auswaschen oder Zerfall des Betons eintreten, da sonst die erforderlichen Druckfestigkeiten nicht erreicht werden.

Die Einbringung in die Schalung erfolgt häufig in freiem Fall und kann durch einen Falltest in Wasser simuliert werden. Dazu werden 100 Gew.-Teile einer homogenen Trockenmischung aus 450 Gew.-Teilen Portlandzement der Festigkeitsklasse Z 45 F entsprechend der deutschen Norm DIN 1164 und 1 350 g Normensand mit der Wassermenge, die notwendig ist, um später aus dem Mörtel eine kompakte Kugel mit gutem Zusammenhaltevermögen zu erhalten, 1 Minute lang in einer Porzellankasserole innig verrührt, anschließend 10 Minuten belassen und dann erneut 1 Minute intensiv aufgerührt.

Aus dem so erhaltenen Mörtel formt man eine Kugel, bestimmt ihr Gewicht und läßt sie in einem 1 l-Meßzylinder, welcher mit Leitungswasser bis zur 1 l-Marke gefüllt ist und in der Höhe und im Durchmesser 33 cm bzw. 6 cm mißt, durch das Wasser auf den Boden des Meßzylinders fallen. Dann stürzt man das Gefäß auf den Kopf, läßt die Kugel zu der mit einer Hand verschlossenen Öffnung des Meßzylinders zurückfallen und nimmt sie heraus. Durch Wiegen der Kugel stellt man den Gewichtsverlust im Vergleich zur Kugel vor dem Fallversuch im Wasser fest.

Ein Mörtel mit gutem Zusammenhalt zeigt minimalen Gewichtsverlust durch Ausschwemmung, außerdem bleibt das Wasser im Meßzylinder während des Kugelfalls weitgehend klar. Die Prüfung des erfindungsgemäßen Zusatzmittels erfolgte nach der beschriebenen Methode. Dazu wurden Mörtel hergestellt, bei denen jeweils 1,7 Gew.-Teile der pulverförmigen Additive nach den Herstellungsbeispielen 8 und 9 im Anmachwasser gelöst waren. Die Ergebnisse der Fallversuche sind in Tabelle 18 aufgelistet.

Tabelle 18

| Zusammenhaltevermögen von Mörtelmischungen unter Wasser | | | |
|---|---|---|---|
| | Gewichtsverlust der Mörtelkugel [bezogen auf das Ausgangsgewicht] | Zustand der Mörtelkugel | Zustand des Wassers |
| Kontrollversuch | 8,6 Gew.-% | teiweise zerfallen | stark getrübt |
| mit Produkt nach Beispiel 8 | 4,5 Gew.-% | kompakt | trüb |
| mit Produkt nach Beispiel 9 | 3,7 Gew.-% | kompakt | leicht getrübt |

Die Beispiele belegen das gute Zusammenhaltevermögen von Mörteln für Unterwasserbeton, wie sie mit Hilfe der erfindungsgemäßen Kondensate hergestellt werden können.

**Patentansprüche**

1. Hochviskose, Sulfonsäuregruppen enthaltende Kondensationsprodukte auf Basis von Amino-s-triazinen mit wenigstens 2 Aminogruppen und Formaldehyd,
   **dadurch gekennzeichnet**,
   daß sie als einen Feststoffgehalt von 20 Gew.-% aufweisende wäßrige Lösungen eine Viskosität von 500 bis 100 000 cP bei 20°C und einen pH-Wert von 8,0 bis 13,0 besitzen und durch

   a) Kondensation von Amino-s-triazin, Formaldehyd und Sulfit im Molverhältnis 1 : 1,9 bis 2,9 : 0,7 bis 1,3 in wäßriger Lösung bei einem pH-Wert von 9,0 bis 12,0 und einer Temperatur von 50 bis 90°C, bis das Sulfit nicht mehr nachweisbar ist und

   b) anschließende Weiterkondensation bei einem pH-Wert von 2,0 bis 5,0 und einer Temperatur von 50 bis 100°C, bis die Viskosität den gewünschten Wert aufweist, erhältlich sind.

2. Kondensationsprodukt nach Anspruch 1,
   **dadurch gekennzeichnet**,
   daß das Amino-s-triazin Melamin ist.

3. Kondensationsprodukt nach Anspruch 1 oder 2,
**dadurch gekennzeichnet**,
daß das Molverhältnis Amino-s-triazin zu Formaldehyd zu Sulfit 1 : 2,0 bis 2,3 : 0.9 bis 1.1 beträgt.

4. Kondensationsprodukte nach einem der Ansprüche 1 bis 3,
**dadurch gekennzeichnet**,
daß bis zu 50 Mol-% des Formaldehyds durch Acetaldehyd und/oder Glyoxylsäure ersetzt sind.

5. Kondensationsprodukte nach einem der Ansprüche 1 bis 4,
**dadurch gekennzeichnet**,
daß bis zu 50 Mol-% des Sulfits durch eine reaktive Aminosulfonsäure, Amidosulfonsäure und/oder Aminocarbonsäure ersetzt sind.

6. Verfahren zur Herstellung von hochviskosen, Sulfonsäuregruppen enthaltenden Kondensationsprodukten auf Basis von Amino-s-triazinen mit wenigstens 2 Aminogruppen und Formaldehyd, **dadurch gekennzeichnet**, daß man

   a) Amino-s-triazin, Formaldehyd und Sulfit im Molverhältnis 1 : 1,9 bis 2,9 : 0,7 bis 1,3 in wäßriger Lösung bei einem pH Wert von 9,0 bis 12,0 und einer Temperatur von 50 bis 90°C so lange kondensiert, bis das Sulfit nicht mehr nachweisbar ist und

   b) anschließend bei einem pH-Wert von 2,0 bis 5,0 und einer Temperatur von 50 bis 100°C so lange weiterkondensiert, bis die Viskosität einer auf einen pH-Wert von 8,0 bis 13,0 alkalisch gestellten und einen Feststoffgehalt von 20 Gew.-% aufweisenden wäßrigen Lösung einen Wert von 500 bis 100 000 cP bei 20°C aufweist.

7. Verfahren nach Anspruch 6,
**dadurch gekennzeichnet**,
daß man als Amino-s-triazin Melamin einsetzt.

8. Verfahren nach Anspruch 6 oder 7,
**dadurch gekennzeichnet**,
daß man ein Molverhältnis Amino-s-triazin zu Formaldehyd zu Sulfit von 1 : 2,0 bis 2,3 : 0,9 bis 1,1 anwendet.

9. Verfahren nach einem der Ansprüche 6 bis 8,
**dadurch gekennzeichnet**,
daß die Gesamtkonzentration der Reaktionskomponenten in der wäßrigen Lösung so eingestellt wird, daß das Kondensationsprodukt mit einem Feststoffgehalt von 5 bis 25 Gew.-% anfällt.

10. Verfahren nach einem der Ansprüche 6 bis 9,
**dadurch gekennzeichnet**,
daß der pH-Wert in der ersten Stufe auf 10,5 bis 11,5 eingestellt wird.

11. Verfahren nach einem der Ansprüche 6 bis 10,
**dadurch gekennzeichnet**,
daß die erste Reaktionsstufe bei Temperaturen von 60 bis 80°C durchgeführt wird.

12. Verfahren nach einem der Ansprüche 6 bis 11,
**dadurch gekennzeichnet**,
daß der pH-Wert in der zweiten Stufe auf 3,0 bis 4,5 eingestellt wird.

13. Verfahren nach einem der Ansprüche 6 bis 12,
**dadurch gekennzeichnet**,
daß im Anschluß an die Reaktionsstufe b) zur Reduzierung des freien Formaldehydgehaltes das Kondensationsprodukt in stark alkalischem Bereich bei pH $\geq$ 11,0 und einer Temperatur von 50 bis 100°C, vorzugsweise bei 60 bis 80°C, einer Nachbehandlung unterworfen wird.

14. Verfahren nach einem der Ansprüche 6 bis 13,
**dadurch gekennzeichnet**,

daß man in Stufe b) so lange weiterkondensiert, bis die Viskosität der auf pH-Wert 8,0 bis 13,0 alkalisch gestellten und einen Feststoffgehalt von 20 Gew.-% aufweisenden wäßrigen Lösung bei 20°C 1 000 bis 50 000 cP beträgt.

15. Verwendung eines Kondensationsprodukts nach einem der Ansprüche 1 bis 5 zur Stabilisierung von wäßrigen Suspensionen, insbesondere anorganischen Bindemittelsuspensionen, in einer Menge von 0,01 bis 10 Gew.-% bezogen auf den Feststoffgehalt der jeweiligen wäßrigen Suspension.

16. Verwendung eines Kondensationsprodukts nach Anspruch 15,
    **dadurch gekennzeichnet**,
    daß es in einer Menge von 0,1 bis 5 Gew.-% bezogen auf den Feststoffgehalt der wäßrigen Suspension eingesetzt wird.

17. Verwendung eines Kondensationsprodukts nach einem der Ansprüche 15 oder 16 in Kombination mit den üblichen Fließmitteln, insbesondere auf Basis von sulfonierten Melamin-Formaldehyd-Harzen für den Zweck von Anspruch 15.

18. Verwendung eines Kondensationsprodukts gemäß Anspruch 17,
    **dadurch gekennzeichnet**,
    daß es in einem Gewichtsverhältnis von 5 : 1 bis 1 : 5 bezogen auf die sulfonierten Melamin-Formaldehyd-Harze eingesetzt wird.

Abb.1a          Abb.1b

Abb. 2a        Abb. 2b